# EUROPÄISCHE PATENTSCHRIFT

(11) **EP 1 911 578 B1**
(45) Veröffentlichungstag und Bekanntmachung des Hinweises auf die Patenterteilung: **20.05.2009**
(21) Anmeldenummer: 07019621.7
(22) Anmeldetag: 08.10.2007
(51) Int. Cl.: B32B 5/18, E04F 15/04

(54) **Verfahren zur Herstellung einer Bauplatte und danach hergestellte Bauplatte**
Method for manufacturing a construction board and construction board manufactured accordingly
Procédé de fabrication d'un panneau de construction et panneau de construction fabriqué selon celui-ci

(30) Priorität: 12.10.2006 DE 102006048735
(43) Veröffentlichungstag der Anmeldung: 16.04.2008
(73) Patentinhaber: Flooring Technologies Ltd., Portico Building Marina Street Pieta MSD 08 (MT)
(72) Erfinder:
(74) Vertreter: Rehmann, Thorsten

(56) Entgegenhaltungen:
- EP-A- 0 154 794
- DE-A1- 10 329 728

## Beschreibung

Die Erfindung betrifft ein Verfahren zum Herstellen einer Bauplatte, bei dem auf die Oberseite und/oder die Unterseite einer Trägerplatte aus einem Holzwerkstoff oder einem Gemisch aus Holzwerkstoff und Kunststoff Kunstharzschichten aufgebracht werden und der Schichtaufbau unter Wirkung von Druck und Temperatur verpresst wird, sowie eine nach diesem Verfahren hergestellte Bauplatte.

Ein derartiges Verfahren ist beispielsweise aus der DE 102 52 863 A1 bekannt. Aus nach einem solchen Verfahren hergestellten Bauplatten werden beispielsweise Fußbodenpaneele gefertigt, die als Parkettsubstitution weit verbreitet sind.

Nachteilig ist, dass ein derart starrer Bodenbelag wegen seines Aufbaues und der Rohdichte der Trägerplatte wenig Komfort im Hinblick auf die Schalldämmung und -dämpfung beim Begehen bietet. Daher ist es bekannt, einen Bodenbelag beispielsweise auf einer Unterlage aus Schaummatten oder auf elastischen Altbelägen, wie beispielsweise kurzflorigen Teppichen, zu verlegen. Dies ist aber wegen der Aufbauhöhe bei Teppichen oder Altbelägen nicht unproblematisch und wegen des zusätzlichen Arbeitsschrittes der Verlegung und Fixierung einer Schaummatte nicht aufwandsfrei.

Der Trittschall entsteht durch Reflexionen von Stoßwellen, die beim Begehen in den Boden eingeleitet werden. Um diese Reflexionen zu vermindern, ist es beispielsweise aus der DE 202 00 235 U1 bekannt, auf eine Bauplatte eine mit der Unterseite des Kerns verbundene strukturierte Schalldämmschicht aufzutragen. Durch die Strukturierung werden die Schalldruckwerte beim Begehen des Fußbodens reduziert und die zugehörigen Frequenzen in einen tieferen Bereich verschoben.

Die Ausbildung der Struktur muss entweder beim Aufstreichen des thermoplastischen Materials berücksichtigt oder nachträglich durch bereichsweises Erwärmen oder Aufschmelzen des thermoplastischen Materials erzeugt werden.

Aus der DE 10 2004 056 540 A1 ist ein Gegenzugimprägnat für Laminatbodenplatten bekannt, das aus einem harzimprägnierten Trägerpapier besteht, auf das einseitig eine schalldämmende Materialschicht aufgeklebt ist. Nachteilig sind einerseits die hohen Kosten der Papierlage, die die Grundlage des Gegenzugimprägnates bildet und andererseits, dass sich ein solches Gegenzugimprägnat nur in Pressen verarbeiten lässt, die über eine Zuführung von Papierlagen verfügen. Solche Gegenzugimprägnate lassen sich nicht in integrierten Anlagen einsetzen, die Trägerplatten direkt bedrucken und anschließend verpressen.

Der Trittschalldämmung eines Bodenbelages kommt sicherlich eine hohe Bedeutung zu. Für eine einen Bodenbelag begehende Person ist jedoch der Raumschall weitaus störender. Der Raumschall setzt sich aus den Schallwellen zusammen, die beim Begehen des Bodens unmittelbar oder mittelbar reflektiert werden.

Aus der DE 100 34 407 C1 ist ein Laminatpaneel bekannt, das sich durch eine auf seiner Unterseite mittels Streifenverleimung befestigte Dämmschicht auszeichnet, die in Längs- und Querrichtung kürzer ausgebildet ist als das Paneel. Durch die gegenüber dem Paneel kürzere Ausbildung der Dämmschicht stellen sich nach dem Verlegen der Paneele sowohl in Längsrichtung als auch in Querrichtung zwischen jeden Dämmschichten jedes Paneels Luftpolster ein, die die Schallisolierung deutlich erhöhen, weil der Schall nicht über die Paneelfuge hinweg weitergeleitet werden kann, da eine Kompression der Dämmschicht weitgehend vermieden wird. Hierdurch wird der Raumschall deutlich reduziert. Nachteilig ist auch hier, dass ein derartiges Fußbodenpaneel nicht in integrierten Anlagen hergestellt werden kann sowie der erhöhte Produktionsaufwand durch die zusätzlichen Arbeitsschritte des Aufbringens des Leimes sowie der Dämmschicht.

Die DE 103 29 728 A1 offenbart ein Fußbodenelement, bei dem auf eine Trägerplatte aus Holzwerkstoff oder Massivholz eine Verbundschicht aufgebracht wird, in der ein bahnartiges Trägermaterial, beispielsweise ein Gewebe oder Vlies, mit einem Harz imprägniert ist und expandierbare thermoplastische Teilchen enthält. Der Schichtaufbau wird anschließend unter Druck- und Temperatureinfluss verpresst, wobei die Verbundschicht expandiert. Damit ist es möglich, die Oberseite der Trägerschicht zu egalisieren. Nachteilig ist hier neben den erhöhten Kosten für die Lage eines bahnartigen Trägermaterials, dass die in der DE 103 29 728 A1 vorgeschlagene Verbundschicht nur in Pressen verarbeitet werden kann, die über eine Zuführung von Lagen eines bahnartigen Trägermaterials verfügt. In integrierten Anlagen, die Trägerplatten direkt bedrucken und anschließend verpressen, ist ein derartiges Verfahren nicht durchführbar.

Die EP 0 154 794 A1 offenbart ein Granulat, dass aus kleinen Kügelchen oder Perlen besteht, die mit einem expandierbaren Phenolharz ummantelt sind. Dieses Granulat kann in Formteile eingefüllt und anschließend unter Temperatureinfluss verpresst werden. Dabei expandiert das die einzelnen Teilchen des Granulates umschließende Phenolharz und es bildet sich eine durchgehende Schicht. Ein derartiges Granulat lässt sich lediglich verwenden, wenn es in Formteile eingefüllt werden kann, und in diesen verpresst wird. Ein Beschichten einer Trägerplatte, beispielsweise aus Holzwerkstoff, die noch mehrere weitere Verarbeitungsstationen durchläuft, ist nicht möglich. Zudem ist die Herstellung des Granulates, bei der ein Ausgangsgranulat mit der Schicht aus Kunstharz ummantelt werden muss, teuer und zeitaufwändig.

Der Erfindung liegt die Aufgabe zugrunde, ein gattungsgemäßes Verfahren zur Herstellung einer Bauplatte dahingehend zu verbessern, dass unter Beibehaltung der äußeren Abmessungen einerseits das Gewicht reduziert und andererseits die Dämm- und/oder Dämpfeigenschaften der Bauplatte variiert werden können.

Zur Problemlösung zeichnet sich das gattungsgemäße Verfahren dadurch aus, dass zumindest eine der Kunstharzschichten beim Verpressen expandiert und dieser Schicht wenigstens ein die Elastizität erhöhenden Füllstoff beigegeben ist.

Wird eine expandierbare Schicht auf die Oberseite des Kerns aufgetragen, dämpft eine derart hergestellte Bauplatte den Trittschall beim Begehen eines aus diesen Bauplatten gebildeten Fußbodens deutlich ab. Der Bodenbelag ist in der Lage, die Aufprallenergie in Kompressionsarbeit umzuwandeln. Dadurch werden die in den Fußboden emittierten Schallwellen deutlich verringert, so dass auch weniger Schallwellen reflektiert werden können. Für eine den Bodenbelag begehende Person ergibt sich so ein deutlich angenehmeres, weil leiseres, Gehgefühl. Zusätzlich bietet diese Ausführungsform den Vorteil, dass die normalerweise kalte Anmutung eines aus Bauplatten hergestellten Fußbodens verbessert wird. Der Fußboden wird weicher, wärmer und elastischer, so dass auch barfuss ein deutlich angenehmeres Begehgefühl hervorgerufen wird. Dies ist insbesondere für die Verlegung in Kinderzimmern von Vorteil, da Kinder im Allgemeinen oft auf dem Fußboden liegen, sitzen oder barfuss auf ihm laufen.

Wird die expandierbare Schicht auf die Unterseite des Kerns aufgetragen, wird der Trittschall gedämpft, da zwischen dem Holzwerkstoffkern und dem unter dem Bodenbelag liegenden Fußboden eine dämpfende Schicht entsteht. Dadurch, dass diese Schicht mit dem Kern verpresst wird, wird eine gute und dauerhafte Verbindung mit der Bauplatte erzielt. Denkbar ist es auch, dass nur eine einzige Schicht und nur auf die Unterseite aufgetragen wird. In allen Fällen kann das Verfahren auch in integrierten Anlagen verwendet werden, weil die Schicht direkt auf den Kern der Trägerplatte aufgestrichen oder aufgewalzt werden kann.

Vorteilhafterweise wird eine expandierbare Schicht sowohl auf die Oberseite als auch auf die Unterseite des Kerns aufgetragen. Die beiden oben beschriebenen Effekte ergänzen sich und sowohl Raum- als auch Trittschall werden deutlich verringert.

Zusätzlich zu den genannten Effekten kommt es zu einer deutlichen Gewichtseinsparung bei einer nach diesem Verfahren hergestellten Bauplatte, da die expandierbare Schicht einen relativ hohen Gasanteil aufweist und damit sehr leicht ist.

Vorzugsweise besteht die expandierbare Kunstharzschicht aus einem Gemisch aus Harnstoff- und/oder Melaminharz und/oder Phenolharz. Dieser Schicht wird vorteilhafterweise wenigstens ein aufschäumendes Additiv beigemischt, dessen Gasanteil bei Einwirkung von Druck und/oder Temperatur ansteigt. Durch den Anstieg des Gasanteils beim Verpressen schäumt die Schicht auf. Durch das sich dabei vergrößernde Volumen bei gleich bleibender Masse der Schicht nimmt ihre Dichte ab. Die expandierbare Schicht kann jedoch auch aus einem aufschäumenden Polyurethan bestehen.

Das aufschäumende Additiv kann eine Substanz enthalten, die bei Temperaturerhöhung unter Entstehung eines Zersetzungsgases zumindest teilweise zerfällt. Als geeignet hierfür hat sich beispielsweise Azodicarbonamid erwiesen. Die beim Zerfall entstehenden Zersetzungsgase verursachen den Aufschäumeffekt.

Alternativ kann das Additiv auch einen Anteil an gasgefüllten Mikrokapseln enthalten, die sich bei Temperaturerhöhung ausdehnen. Diese Mikrokapseln können beispielsweise aus einem Polymer bestehende kugelförmige Kapseln sein, die mit Pentan gefüllt sind. Geeignet für diese Verwendung sind auch Produkte der Firma Schönox, beispielsweise das Produkt "Expancel".

Die Menge des der expandierbaren Schicht zugesetzten Additivs beträgt vorzugsweise zwischen 1 % und 15% bezogen auf das Gewicht der expandierbaren Schicht.

Je nach aufgetragener Menge Kunstharz und zugesetzter Menge des Treibmittels können Schichtdickenerhöhungen von bis zu 0,5 mm bzw. 6,5 % bezogen auf eine 8 mm HDF-Platte erreicht werden. Die zugesetzten Treibmittel verändern die Lagerstabilität der beschichteten Platten nicht. Der Aufschäumprozess findet erst statt, wenn das Produkt in der Kurztaktpresse beschichtet wird. Vorher im Prozess stattfindende Zwischentrocknungsschritte beeinflussen das Treibmittel nicht. Der Aufschäumprozess benötigt Temperaturen oberhalb von 140°C.

Des Weiteren können der expandierbaren Schicht verschiedene Füllstoffe beigemischt werden. Vorzugsweise handelt es sich bei dem die Elastizität erhöhenden Füllstoff um Zellulosefasern. Die Menge des die Elastizität erhöhenden Füllstoffes beträgt vorteilhafterweise 1 % bis 5% bezogen auf das Gewicht der expandierbaren Schicht.

Der expandierbaren Schicht kann wenigstens die Dichte erhöhender Füllstoff beigegeben werden. Als geeignet haben sich Kreide oder Marmormehl erwiesen. Die Menge des die Dichte erhöhenden Füllstoffes beträgt vorteilhafterweise 1 % bis 20% bezogen auf das Gewicht der expandierbaren Schicht.

Der expandierbaren Schicht kann wenigstens ein die elektrische Leitfähigkeit erhöhender Füllstoff beigemischt werden, um eine statische Aufladung der Bauplatte zu verhindern. Hierfür eignen sich beispielsweise Kohlenstoff oder Kohlenstoffverbindungen. Die Menge des die elektrische Leitfähigkeit erhöhenden Füllstoffes beträgt vorzugsweise 1 % bis 10% bezogen auf das Gewicht der expandierbaren Schicht.

Als besonders vorteilhaft hat sich erwiesen, dass die expandierbare Schicht durch Sprühen oder Walzen aufgebracht werden kann, wodurch eine Anwendung des Verfahrens in integrierten Anlagen ermöglicht wird. Vorzugsweise beträgt das Gewicht der expandierbaren Schicht nach dem Auftragen zwischen 50 g/m² und 150 g/m². Vor dem nächsten Arbeitsschritt wird die expandierbare Schicht auf eine Restfeuchte zwischen 4% und 8% zurückgetrocknet.

In dem oder den beim Verpressen verwendeten Pressblechen können Vertiefungen vorgesehen sein, in die zumindest Teile der expandierbaren Schicht beim Verpressen expandieren und so in der entstehenden Schicht eine Struktur ausbilden. Strukturen in einer expandierbaren Schicht auf der Unterseite der Bauplatte verbessern die Schalldämmeigenschaften, da sie für zusätzliche Hohlräume und Lufteinschlüsse zwischen einem aus nach dem Verfahren hergestellten Bauplatten hergestellten Bodenbelag und dem darunter liegenden Fußboden sorgen.

Nach dem Verpressen weist der Schichtaufbau vorzugsweise ein sichtbares Dekor auf. Dieses Dekor kann im Schichtaufbau als eine bedruckte Papierlage ausgebildet sein oder aus mindestens einer direkt auf die darunter liegende Schicht aufgedruckten Farbschicht bestehen. Die beim Verpressen in einer expandierbaren Schicht auf der Oberseite der Bauplatte entstandene Struktur kann vorteilhafter Weise zum so aufgebrachten Dekor korrespondieren. In diesem Fall ist es möglich, die optischen und haptischen Eigenschaften der Bauplatte weiter zu verbessern und sie einer Echtholzbauplatte ähnlicher zu machen.

Vorteilhafterweise umfasst der zu verpressende Schichtaufbau eine nach dem Verpressen transparente abriebfeste Lage, die sich oberhalb des Dekors befindet. Diese kann beispielsweise aus einer Kunstharzschicht bestehen, der abriebfeste Partikel, beispielsweise Korund, beigemischt wurden. Vorzugsweise weist die abriebfeste Lage eine Oberflächenstruktur auf. Vorteilhaft ist, wenn die Oberflächenstruktur der abriebfesten Lage auf das verwendete Dekor und/oder die Struktur der expandierbaren Schicht abgestimmt wird. Die Oberflächenstruktur der abriebfesten Lage bildet vorteilhafterweise weitgehend Vertiefungen und die Oberflächenstruktur der expandierbaren Schicht weitgehend Erhöhungen aus. Die abriebfeste Lage ist bevorzugt papierfrei und wird im Wesentlichen flüssig aufgetragen.

Vorzugsweise wird die expandierbare Schicht von einer Abdeckschicht abgedeckt. Diese Schicht schützt die expandierbare Schicht während des Handlings bei der Produktion und in der Nutzung und hat gleichzeitig eine stabilisierende Funktion. Vorteilhafterweise liegt die Auftragsmenge dieser Abdeckschicht zwischen 15 g/m² und 50 g/m². Die Schicht wird nach dem Auftragen auf eine Restfeuchte von 4% bis 6,5% zurückgetrocknet.

Vorzugsweise weist die Oberflächenstruktur lang gestreckte Erhöhungen auf, da damit eine besonders große Oberflächenvergrößerung hervorgerufen werden kann.

Der zu verpressende Schichtaufbau umfasst bevorzugt eine auf die Unterseite der Trägerplatte aufgetragene Gegenzuglage. Durch die auf die Oberseite der Trägerplatte aufgetragenen Schichten wirken starke Zugkräfte auf die Trägerplatte, die zur Schüsselung führen können. Die Gegenzuglage kompensiert diese Zugkräfte. Die Gegenzuglage kann vorteilhafterweise als direkt auf die Trägerplatte aufgebrachte Farbschicht ausgebildet sein, die aus mindestens einer Farblage besteht.

Eine nach dem Verfahren hergestellte Bauplatte, insbesondere ein Fußbodenpaneel, zeichnet sich dadurch aus, dass auf der Oberseite und/oder der Unterseite der Trägerplatte leimlos Schichten aufgetragen sind, von denen zumindest eine als aufgeschäumte Schicht ausgebildet ist. Vorzugsweise sind derartige Bauplatte an ihren Seitenkanten mit Verbindungsmitteln, wie beispielsweise Nut-Feder-Verbindungen, versehen, mit denen identische Bauplatten verbunden werden können. Diese Verbindungsmittel können auch mit Verriegelungsmittel versehen sein, durch die eine Bewegung verbundener Bauplatten relativ zueinander in Richtung der von ihnen gebildeten Ebene und senkrecht dazu verhindert werden kann.

Mit Hilfe einer Zeichnung sollen Ausführungsbeispiele der Erfindung nachfolgend näher erläutert werden. Es zeigt:
- Figur 1 -: eine Draufsicht auf eine Bauplatte;
- Figur 2 -: eine erste Ausführungsform der Bauplatte in Teilquerschnitt;
- Figur 3 -: die schematische Darstellung einer Kurztaktpresse mit der zu verpressenden Bauplatte im Teilquerschnitt;
- Figur 4 -: eine zweite Ausführungsform der Bauplatte in Teilquerschnitt.

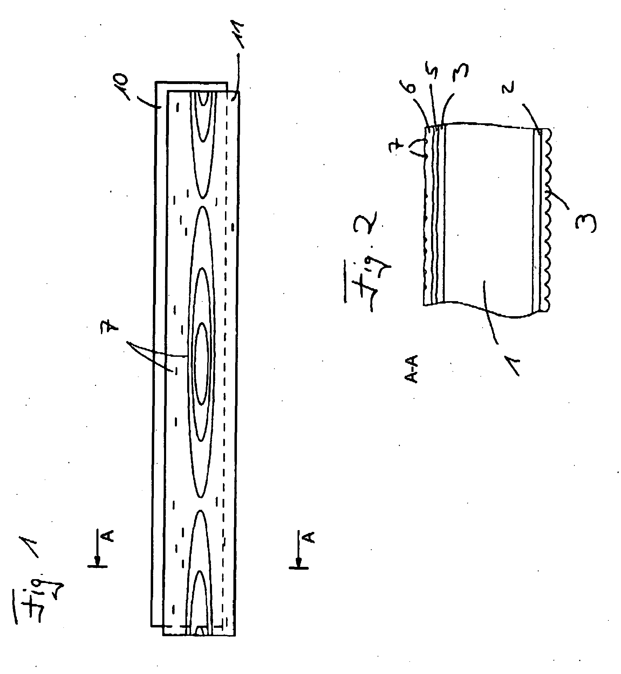

Figur 1 zeigt die Draufsicht auf eine Bauplatte, die als Fußbodenpaneel verwendet wird. Zu erkennen ist die Oberflächenstruktur 7, die in diesem Fall die Struktur eines Echtholzdekors nachbildet. Die Seitenkanten der Bauplatte sind mit Nut 10 und Feder 11 ausgestattet, die mit Verriegelungselementen ausgerüstete sind, so dass mehrere identische Bauplatten miteinander verbunden und verriegelt werden können.

Figur 2 zeigt einen Querschnitt entlang der Linie A-A aus Figur 1. Die Bauplatte weist eine Trägerplatte 1 auf, auf deren Oberseite eine expandierbare Schicht 3 aufgebracht ist. Diese wird von einer Dekorschicht 5 und einer abriebfesten Lage 6 abgedeckt. Während des Verpressens wurde die Struktur 7 in die Oberseite der abriebfesten Lage 6 eingeprägt. Damit kann der optische und haptische Eindruck der Bauplatte dem einer Platte aus Echtholz angenähert werden. Auf der Unterseite der Trägerplatte 1 ist eine Gegenzuglage 2 angebracht. Diese verhindert, dass durch den von den auf der Oberseite der Trägerplatte 1 aufgebrachten Schichten hervorgerufenen Zug die Bauplatte schüsselt. Auf der Unterseite der Gegenzuglage 2 ist eine weitere expandierbare Schicht 3 aufgebracht. Beim Verpressen ist in die expandierbare Schicht 3 auf der Unterseite des Gegenzugs 2 eine Struktur 7 eingebracht worden. Wird eine solche Bauplatte beispielsweise als Fußbodenbelag verwendet, werden durch diese Struktur zusätzliche Holräume zwischen dem Bodenbelag und dem darunter liegenden Fußboden generiert. Diese sorgen für Lufteinschlüsse, die einerseits eine bessere Wärmedämmung gewährleisten und andererseits die Schalleigenschaften des Bodenbelages deutlich verbessern.

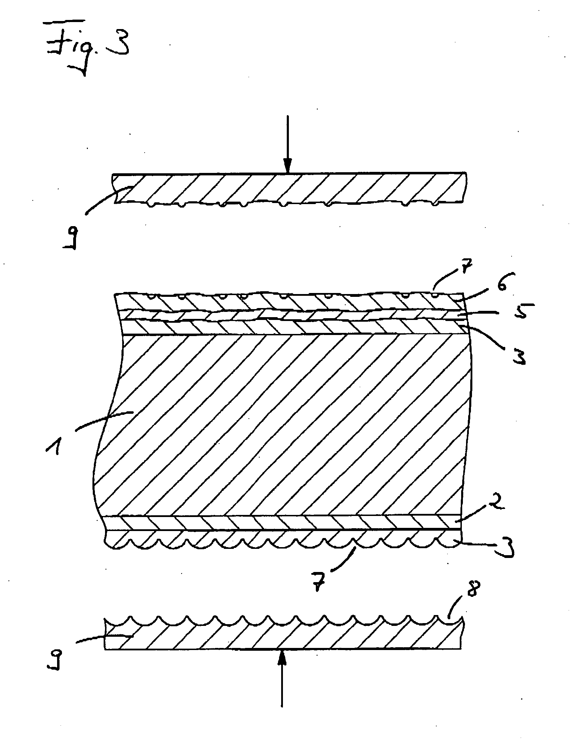

Figur 3 zeigt eine schematische Darstellung einer Kurztaktpresse mit den beiden Pressblechen 9 und der dazwischen liegenden zu verpressenden Bauplatte. Diese besteht wieder aus einer Trägerplatte 1, auf deren Unterseite der Gegenzug 2 und eine expandierbare Schicht 3 aufgebracht sind. Während des Verpressens expandiert die expandierbare Schicht 3 auf der Unterseite des Gegenzugs 2 in die im unteren Pressblech 9 vorgesehenen Vertiefungen 8. Auf der Oberseite der Trägerplatte ist eine expandierbare Schicht 3 aufgebracht, die bereits deutlich eine Oberflächenstruktur aufweist. Die darüber liegende Dekorschicht 5 wird von einer abriebfesten Lage 6 abgedeckt. Beim Verpressen werden durch das obere Pressblech 9 Strukturen 7 in die abriebfeste Lage 6 eingeprägt.

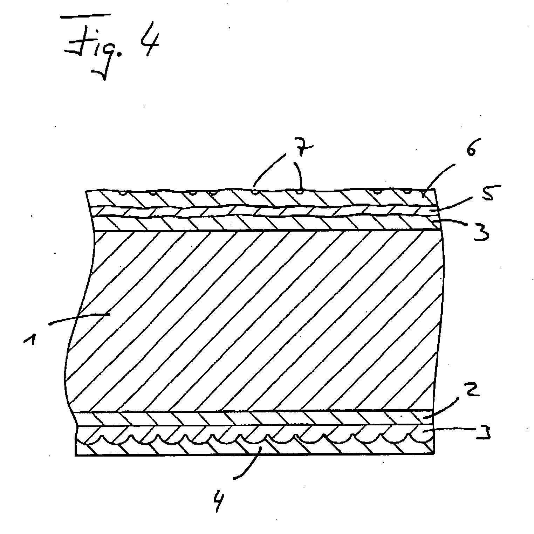

Figur 2 zeigt einen Teilquerschnitt durch eine Bauplatte, wie sie bereits in Figur 2 gezeigt ist. In Figur 4 ist die auf der Unterseite des Gegenzugs 2 aufgebrachte expandierbare Schicht 3 jedoch von einer zusätzlichen Abdeckschicht 4 überdeckt. Durch diese Schicht wird die Struktur in der expandierbaren Schicht 3 stabilisiert und während des Handlings bei der Herstellung sowie beim Transport geschützt.

### Bezugszeichenliste

- 1: Trägerplatte
- 2: Gegenzug
- 3: expandierbare Schicht
- 4: Abdeckschicht
- 5: Dekor
- 6: abriebfeste Lage
- 7: Struktur
- 8: Vertiefung
- 9: Pressblech
- 10: Nut
- 11: Feder

## Patentansprüche

1. Verfahren zum Herstellen einer Bauplatte, bei dem auf die Oberseite und/oder die Unterseite einer Trägerplatte (1) aus einem Holzwerkstoff oder einem Gemisch aus Holzwerkstoff und Kunststoff Kunstharzschichten aufgebracht werden und der Schichtaufbau unter Wirkung von Druck und Temperatur verpresst wird, **dadurch gekennzeichnet, dass** wenigstens eine der Kunstharzschichten (3) bei dem Verpressen expandiert und dieser Schicht (3) wenigstens ein die Elastizität erhöhender Füllstoff beigegeben ist.

2. Verfahren nach Anspruch 1, **dadurch gekennzeichnet, dass** die expandierbare Kunstharzschicht (3) aus einem aufschäumenden Polyurethan besteht.

3. Verfahren nach Anspruch 1, **dadurch gekennzeichnet, dass** die expandierbare Kunstharzschicht (3) aus einem Gemisch aus Harnstoff- und/oder Melaminharz und/oder Phenolharz besteht.

4. Verfahren nach Anspruch 1, 2 oder 3, **dadurch gekennzeichnet, dass** der expandierenden Schicht (3) wenigstens ein aufschäumendes Additiv, dessen Gasanteil bei Wirkung von Druck und/oder von Temperatur ansteigt, zugegeben wird.

5. Verfahren nach Anspruch 4, **dadurch gekennzeichnet, dass** das Additiv wenigstens eine Substanz, insbesondere Azodicarbonamid, enthält, die bei Temperaturerhöhung unter Entstehung eines Zersetzungsgases wenigstens teilweise zerfällt.

6. Verfahren nach Anspruch 4, **dadurch gekennzeichnet, dass** das Additiv einen Anteil an gasgefüllten Mikrokapseln, insbesondere aus einem Polymer bestehende kugelförmige Kapseln mit einer aus Pentan bestehenden Gasfüllung, enthält, die sich bei Temperaturerhöhung ausdehnen und dass die Menge des wenigstens einen aufschäumenden Additivs 1 % bis 15% bezogen auf das Gewicht der expandierbaren Schicht (3) beträgt.

7. Verfahren nach einem oder mehreren der vorstehenden Ansprüche, **dadurch gekennzeichnet, dass** als die Elastizität erhöhender Füllstoff Zellulosefasern in einer Menge von 1 % bis 5% bezogen auf das Gewicht der expandierbaren Schicht (3) verwendet werden.

8. Verfahren nach einem oder mehreren der vorstehenden Ansprüche, **dadurch gekennzeichnet, dass** die expandierbare Schicht (3) durch Sprühen oder Walzen aufgebracht wird, ihr Gewicht nach dem Auftragen zwischen 50 und 150 g/m² beträgt und ihre Feuchte nach dem Aufbringen auf 4 % bis 8 % gebracht wird.

9. Verfahren nach einem oder mehreren der vorstehenden Ansprüche, **dadurch gekennzeichnet, dass** der zu verpressende Schichtaufbau ein nach dem Verpressen sichtbares Dekor (5) umfasst.

10. Verfahren nach Anspruch 9, **dadurch gekennzeichnet, dass** das Dekor (5) als eine bedruckte Papierlage oder als eine direkt gedruckte Lage aus wenigstens einer wenigstens teilweise farbigen Schicht ausgeführt ist.

11. Verfahren nach einem oder mehreren vorstehender Ansprüche, **dadurch gekennzeichnet, dass** zum Verpressen mindestens ein Pressblech (9) vorgesehen ist, in dem eine Vielzahl von Vertiefungen (8) vorgesehen sind, in die Teile der expandierenden Schicht (3) beim Verpressen expandieren und sich in der dabei entstehenden Schicht eine Struktur (7) ausbildet.

12. Verfahren nach einem oder mehreren der vorstehenden Ansprüche, **dadurch gekennzeichnet, dass** der zu verpressende Schichtaufbau eine nach dem Verpressen transparente abriebfeste Lage (6) oberhalb des Dekors (5) umfasst, die abriebfeste Lage (6) als eine mit abriebfesten Partikeln versehene Kunstharzschicht oberhalb der Dekorschicht (5) ausgebildet ist, und eine Oberflächenstruktur (7) aufweist.

13. Verfahren nach Anspruch 12, **dadurch gekennzeichnet, dass** die Oberflächenstruktur (7) der abriebfesten Lage (6) auf das Dekor (5) und/oder die Oberflächenstruktur der expandierbaren Schicht (3) abgestimmt ist und dass die Oberflächenstruktur (7) der abriebfesten Lage (6) weitgehend Vertiefungen und die Oberflächenstruktur (7) der expandierbaren Schicht (3) weitgehend Erhöhungen ausbildet.

14. Verfahren nach einem oder mehreren der vorstehenden Ansprüche, **dadurch gekennzeichnet, dass** die expandierbare Schicht (3) von einer Abdeckschicht (4) abgedeckt wird, deren Auftragsmenge zwischen 15 und 50 g/m² liegt und dass die Abdeckschicht (4) vor dem nächsten Arbeitsschritt auf eine Restfeuchte von 4% bis 6,5% zurückgetrocknet wird.

15. Verfahren nach Anspruch 12, **dadurch gekennzeichnet, dass** die abriebfeste Lage (6) papierfrei ist und im Wesentlichen flüssig aufgetragen wird.

16. Bauplatte, insbesondere Fußbodenpaneel mit einer Trägerplatte (1) aus Holzwerkstoff, insbesondere MDF oder HDF, mit einer an sich gegenüberliegenden Seitenkanten vorgesehenen, zueinander korrespondierenden Feder-Nut-Profilierung, die mit Verriegelungsmitteln versehen ist, über die mehrere Bauplatten leimlos miteinander verbindbar und verriegelbar sind, **dadurch gekennzeichnet, dass** auf der Oberseite und/oder der Unterseite der Trägerplatte (1) leimlos Schichten aus Kunstharz aufgetragen sind, von denen zumindest eine als aufgeschäumt ausgebildet ist, dass der Schichtaufbau ein sichtbares Dekor (5) umfasst, oberhalb dessen eine transparente abriebfeste Lage (6) vorgesehen ist, die eine Oberflächenstruktur (7) aufweist, wobei die Oberflächenstruktur (7) auf das Dekor (5) und/oder die Oberflächenstruktur der expandierbaren Schicht (3) abgestimmt ist, und dass die Oberflächenstruktur (7) der abriebfesten Lage (6) weitgehend Vertiefungen und die Oberflächenstruktur (7) der expandierbaren Schicht (3) weitgehende Erhöhungen ausbildet.

## Claims

1. Method for producing a construction board, in which synthetic resin layers are applied on the upper side and/or the lower side of a carrier board (1) made of a wood-based material or a mixture of wood-based material and plastics material, and the layer structure is pressed under the effect of pressure and temperature, **characterised in that** at least one of the synthetic resin layers (3) is expanded during the pressing process and at least one filler increasing the elasticity is added to this layer (3).

2. Method according to claim 1, **characterised in that** the expandable synthetic resin layer (3) consists of a foamable polyurethane.

3. Method according to claim 1, **characterised in that** the expandable synthetic resin layer (3) consists of a mixture of urea resin and/or melamine resin and/or phenolic resin.

4. Method according to claim 1, 2 or 3, **characterised in that** at least one foamable additive, the gaseous proportion of which increases upon the action of pressure and/or temperature, is added to the expanding layer (3).

5. Method according to claim 4, **characterised in that** the additive contains at least one substance, in particular azodicarbonamide, which at least partially decomposes in the event of a temperature increase with a development of a decomposition gas.

6. Method according to claim 4, **characterised in that** the additive contains a proportion of gas-filled microcapsules, in particular spherical capsules consisting of a polymer, with a gas filling consisting of pentane, which expand in the event of a temperature increase and **in that** the quantity of the at least one foamable additive is 1 % to 15% based on the weight of the expandable layer (3).

7. Method according to any one or more of the preceding claims, **characterised in that** cellulose fibres are used as the filler increasing the elasticity in a quantity of 1 % to 5% based on the weight of the expandable layer (3).

8. Method according to any one or more of the preceding claims, **characterised in that** the expandable layer (3) is applied by spraying or rolling, its weight after application is between 50 and 150 g/m² and its moisture after application is brought to 4% to 8%.

9. Method according to any one or more of the preceding claims, **characterised in that** the layer structure to be pressed comprises a decoration (5) which is visible after pressing.

10. Method according to claim 9, **characterised in that** the decoration (5) is configured as a printed paper layer or as a directly printed layer consisting of at least one at least partially coloured layer.

11. Method according to any one or more of the preceding claims, **characterised in that** at least one pressing plate (9) is provided for pressing, in which a large number of indentations (8) are provided, into which parts of the expanding layer (3) expand during pressing and a structure (7) is formed in the layer being produced in the process.

12. Method according to any one or more of the preceding claims, **characterised in that** the layer structure to be pressed comprises, above the decoration (5), an abrasion-resistant layer (6) which is transparent after pressing, the abrasion-resistant layer (6) is formed as a synthetic resin layer provided with abrasion-resistant particles above the decoration layer (5), and has a surface structure (7).

13. Method according to claim 12, **characterised in that** the surface structure (7) of the abrasion-resistant layer (6) is matched to the decoration (5) and/or the surface structure of the expandable layer (3), and **in that** the surface structure (7) of the abrasion-resistant layer (6) extensively forms indentations and the surface structure (7) of the expandable layer (3) extensively forms elevations.

14. Method according to any one or more of the preceding claims, **characterised in that** the expandable layer (3) is covered by a cover layer (4), the application quantity of which is between 15 and 50 g/m² and **in that** the cover layer (4) before the next working step is dried back to a residual moisture of 4% to 6.5%.

15. Method according to claim 12, **characterised in that** the abrasion-resistant layer (6) is paper-free and is substantially applied in a liquid manner.

16. Construction board, in particular floor panel with a carrier board (1) made of wood-based material, in particular MDF or HDF, comprising a tongue and groove profiling provided on opposing side edges, corresponding with one another and provided with locking means, by means of which a plurality of construction boards can be connected to one another without glue and can be locked, **characterised in that** layers of synthetic resin are applied without glue on the upper side and/or the lower side of the carrier board (1), of which at least one is foamed, **in that** the layer structure comprises a visible decoration (5), above which a transparent abrasion-resistant layer (6) is provided, which has a surface structure (7), the surface structure (7) being matched to the decoration (5) and/or the surface structure of the expandable layer (3), and **in that** the surface structure (7) of the abrasion-resistant layer (6) extensively forms indentations and the surface structure (7) of the expandable layer (3) extensively forms elevations.

## Revendications

1. Procédé de fabrication d'un panneau de construction, dans lequel on applique des strates de résine synthétique sur la face supérieure et/ou la face inférieure d'une plaque de support (1) à base d'un matériau dérivé du bois ou un mélange à base de matériau dérivé du bois et de matière synthétique, et on assemble par pressage la construction stratifiée sous l'action de la pression et la température, **caractérisé en ce qu'**il y a expansion de l'une au moins des strates de résine synthétique (3) lors de l'assemblage par pressage et au moins une charge augmentant l'élasticité est ajoutée à cette strate (3).

2. Procédé selon la revendication 1, **caractérisé en ce que** la strate de résine synthétique (3) expansible consiste en un polyuréthane moussant.

3. Procédé selon la revendication 1, **caractérisé en ce que** la strate de résine synthétique (3) expansible consiste en un mélange à base de résine uréique et/ou de résine mélaminique et/ou de résine phénolique.

4. Procédé selon la revendication 1, 2 ou 3, **caractérisé en ce que** l'on ajoute à la strate expansible (3), au moins un additif moussant dont la proportion de gaz augmente sous l'effet de la pression et/ou de la température.

5. Procédé selon la revendication 4, **caractérisé en ce que** l'additif contient au moins une substance, en particulier de l'azodicarbonamide, qui se décompose au moins partiellement lors de l'augmentation de la température avec formation d'un gaz de décomposition.

6. Procédé selon la revendication 4, **caractérisé en ce que** l'additif contient une proportion de microcapsules remplies de gaz qui se dilatent lors de l'augmentation de la température, en particulier à base de capsules en forme de boule en un polymère, avec un remplissage gazeux en pentane, et **en ce que** la quantité de l'au moins un additif moussant est de 1% à 15% par rapport au poids de la strate expansible (3).

7. Procédé selon l'une ou plusieurs des revendications précédentes, **caractérisé en ce que** l'on utilise en tant que charge augmentant l'élasticité, des fibres de cellulose dans une quantité de 1% à 5% par rapport au poids de la strate expansible (3).

8. Procédé selon l'une ou plusieurs des revendications précédentes, **caractérisé en ce que** la strate expansible (3) est appliquée par pulvérisation ou laminage, son poids après l'application est entre 50 et 150 g/m² et son humidité après l'application est amenée à 4% à 8%.

9. Procédé selon l'une ou plusieurs des revendications précédentes, **caractérisé en ce que** la construction stratifiée à assembler par pressage contient un décor (5) visible après l'assemblage par pressage.

10. Procédé selon la revendication 9, **caractérisé en ce que** le décor (5) est réalisé sous forme d'une couche de papier imprimée ou d'une couche directement imprimée à base d'au moins une strate au moins partiellement colorée.

11. Procédé selon l'une ou plusieurs des revendications précédentes, **caractérisé en ce qu'**il est prévu pour l'assemblage par pressage au moins une tôle de pressage (9), présentant de multiples renfoncements (8), dans lesquels des parties de la strate (3) en expansion viennent s'expanser lors de l'assemblage par pressage et dans lesquels se forme une structure (7) dans la strate (3) alors en formation.

12. Procédé selon l'une ou plusieurs des revendications précédentes, **caractérisé en ce que** la construction stratifiée à assembler par pressage contient au-dessus du décor (5) une couche (6) résistante à l'usure et transparente après l'assemblage par pressage, la couche (6) résistante à l'usure est formée au-dessus de la strate de décor (5) en tant qu'une strate de résine synthétique munie de particules résistantes à l'usure et présente une structure de surface (7).

13. Procédé selon la revendication 12, **caractérisé en ce que** la structure de surface (7) de la couche (6) résistante à l'usure est accordée avec le décor (5) et/ou avec la structure de surface de la strate expansible (3), et **en ce que** la structure de surface (7) de la couche (6) résistante à l'usure forme en grande partie des renfoncements et la structure de surface (7) de la strate (3) expansible forme en grande partie des rehaussements.

14. Procédé selon l'une ou plusieurs des revendications précédentes, **caractérisé en ce que** la strate expansible (3) est recouverte par une strate de recouvrement (4) dont la quantité d'application se situe entre 15 et 50 g/m², et **en ce qu'**avant l'étape du travail on sèche la strate de recouvrement (4) suivante jusqu'à une humidité résiduelle de 4% à 6,5%.

15. Procédé selon la revendication 12, **caractérisé en ce que** la couche (6) résistante à l'usure est sans papier et on l'applique sensiblement liquide.

16. Panneau de construction, en particulier panneau de plancher comprenant une plaque de support (1) à base de matériau dérivé du bois, en particulier du type MDF ou HDF, comportant aux arêtes latérales opposées un profilage rainure-languette se correspondant mutuellement, qui est muni de moyens de verrouillage par l'intermédiaire desquels les plusieurs panneaux de construction sont reliables et verrouillables ensemble sans colle, **caractérisé en ce que** des strates à base de résine synthétique sont appliquées sans colle sur la face supérieure et/ou la face inférieure de la plaque de support (1), parmi lesquelles au moins une est formée en tant que mousse, **en ce que** la construction stratifiée contient un décor (5) visible, au-dessus duquel est prévu une couche (6) résistante à l'usure et transparente, qui présente une structure de surface (7), la structure de surface (7) étant accordée avec le décor (5) et/ou la structure de surface de la strate (3) expansible, et **en ce que** la structure de surface (7) de la couche (6) résistante à l'usure forme en grande partie des renfoncements et la structure de surface (7) de la strate (3) expansible forme en grande partie des rehaussements.
